# EUROPEAN PATENT APPLICATION

(11) **EP 1 116 519 A1**
(43) Date of publication of application: **18.07.2001**
(21) Application number: 00200091.7
(22) Date of filing: 12.01.2000
(51) Int. Cl.: B01J 37/04, B01J 29/06, C10G 45/64, C10G 29/20, C10G 11/05, B01J 37/28

(54) **Solid-state phosphorous activation of crystalline porous silicates**

(71) Applicant: Akzo Nobel N.V., 6824 BM Arnhem (NL)
(72) Inventor: Vogt, E., 3524 KW Utrecht (NL); Tissler, A., 93105 Tegerheim (DE)
(74) Representative: Schalkwijk, Pieter Cornelis

(57) **Abstract**

The present invention is directed to phosphorus-activated crystalline porous silicates such as layered silicates and microporous silicates, processes for said phosphorus activation, catalyst compositions containing said phosphorus-activated crystalline porous silicates, and catalyst additives containing said phosphorus-activated crystalline porous silicates.

The quintessence of the invention is that the crystalline porous silicate is activated with a phosphorus-containing compound in the solid state. The activation method is universally applicable and is more economical and more environmentally friendly than the known phosphorus activation methods, because the drying step necessary in the prior art methods can be avoided.

## Description

The present invention is directed to phosphorus-activated crystalline porous silicates such as layered silicates and microporous silicates, processes for said phosphorus activation, catalyst compositions containing said phosphorus-activated crystalline porous silicates, and catalyst additives containing said phosphorus-activated crystalline porous silicates. In the prior art, crystalline porous layered silicates are also referred to as clays, including anionic clays and cationic clays. The most common crystalline microporous silicates (which are also referred to as zeolites) are metallosilicates. A specific type of metallosilicate is crystalline alumina silicate. Within the framework of this description all these terms will be used as categorised above.

Most crystalline porous silicates have catalytic activity and are used in numerous catalytic reactions. It is known to use phosphorus-containing compounds to improve the selectivity, activity or physical properties of said crystalline porous silicates. For instance, Mobil's US 5,126,298 and US 5,231,064 describe the preparation of a catalyst composition by providing a zeolite slurry and two types of clay slurries, treating at least one of these slurries with a source of phosphorus, combining the slurries, and spray-drying at a pH of below 3. Catalyst compositions obtained with this process are said to have an improved attrition resistance. In US 5,110,776 a phosphorus treatment was used to improve the attrition resistance of catalyst compositions and to improve the octane yield. Here a Y zeolite is treated with a phosphorus-containing aqueous solution, and said treated zeolite is combined directly with a matrix precursor to form a slurry. Said slurry is spray-dried. US 5,601,699 describes the treatment with phosphorus of zeolite BETA, ZSM-12, and ZSM-20 to obtain catalytic cracking catalysts with improved attrition restistance. EP-A-511 013 describes the treatment of ZSM-5 with phosphorus to increase the propylene selectivity. Further, US 5,472,594 describes a process for converting a hydrocarbon feed to a product containing improved yields of C₄/C₅ olefins with a catalyst composition containing zeolite Y and an additive comprising a phosphorus-containing medium pore zeolite such as ZSM-5. Also Mobil's WO 98/41595 describes a process for the catalytic cracking of a hydrocarbon feedstock to produce an enhanced yield of C₃ to C₅ olefins using a catalyst composition comprising a large pore molecular sieve such as zeolite Y and an additive comprising a phosphorus-containing ZSM-5 blended in with the base catalyst containing zeolite Y. The same is described in US 5,456,821. WO 94/13754 describes the same process using a catalyst composition containing a large pore molecular sieve and an additive containing a specific ZSM-5 which, optionally, contains 1.5 to 5.5 wt% elemental phosphorus. Also US 5,521,133 describes the preparation of a ZSM-5 additive by injecting a ZSM-5 and kaolin slurry with phosphoric acid prior to spray-drying. US 3,972,832 describes the phosphorus treatment of ZSM-5 for use as a catalyst for the conversion of aliphatics. In US 4,002,698 phosphorus-treated ZSM-5 is described for use in the catalytic methylating of toluene.

Said activated crystalline porous silicates can be used as a component of a catalyst composition or in additives which can be physically mixed with a catalyst composition, the appropriate physical form depending on the desired use. In the case of use as an additive, care must be taken not to dilute the total catalyst composition too much. This means that for use as additive, it must be possible to include a sufficient amount of crystalline porous silicate in the additive to obtain the desired activity. Further, it is necesarry to activate the crystalline porous silicate to a sufficent level. In the case of use as a catalyst component, care must be taken that the incorporation of the activated crystalline porous silicate does not interfere with the other components of the catalyst composition. This is a serious problem with phosphorus activation, because phosphorus-containing compounds tend to interfere with alumina, which is quite a conventional component of catalyst compositions. Said problem can be solved by using so-called *ex situ* activation. Sinopec's EP-A1-0909-582 describes *ex situ* phosphorus activation of crystalline alumina silcates. It describes the preparation of a catalyst composition for the production of light olefins by mixing the matrix components, adding a mixture of a Y-type zeolite and a high silica zeolite with pentasil structure such as ZSM-5 containing 2-8 wt% (based on the weight of the zeolite) of phosphorus (calculated as P₂O₅) and 0.3-3 wt% of aluminium or magnesium or calcium. The zeolite mixture is treated with an aqueous solution of phosphorus/aluminium or phosphorus/-magnesium or calcium compounds, dried, and calcined prior to the addition to the matrix components. NL-9301333 describes the *ex situ* activation of ZRP zeolite with an aluminium phosphate sol. Said activated ZRP zeolite is incorporated into a catalyst composition containing zeolite Y, clay, and organic oxides.

The present invention provides an *ex situ* activation, so rendering the activated crystalline porous silicate suitable for incorporation into catalyst compositions. Said novel activation method further provides sufficient activation to render the activated crystalline porous silicate suitable for use in additives. The activation method is universally applicable, which means that all types of crystalline porous silicates may be treated in this fashion. Therefore, starting materials may be used which were not previously applicable and novel activated materials can be obtained. Furthermore, the invention provides an activation method which is more economical and more environmentally friendly than the known phosphorus activation methods. In the known activation methods, the phosphorus-containing compound is always combined with the crystalline porous silicate in the liquid state: the crystalline porous silicate is always impregnated with a phosphorus compound-containing solution. If the phosporus-containing compound is solid, it is first dissolved in a solvent prior to being combined with the zeolite. This means that after treatment the mixture must be dried and sometimes filtered before drying. This is uneconomical, because it requires an additional step and extra energy and is, of course, environmentally unfriendly.

The present invention is directed to solid-state phosphorus-activated crystalline porous silicate. Although the p-NMR spectrum of the phosphorus-activated crystalline porous silicate according to the invention differs from the phosphorus-activated porous silicates of the prior art, the present invention provides an activated crystalline porous silicate with an activity which is comparable with that of crystalline porous silicates activated using conventional methods.

The phosphorus-activated crystalline porous silicate according to the invention may be prepared by:
a) combining crystalline porous silicate with a phosphorus-containing compound in the solid state,
b) intimately mixing the crystalline porous silicate/phosphorus-containing compound mixture,
c) calcining the crystalline porous silicate/phosphorus-containing compound mixture to obtain a phosphorus-activated crystalline porous silicate.
For this process no intermediate drying is necessary. Crystalline porous silicates and p-containing compounds usually contain some water, and it is not necessary to dry the starting materials until they are completely dry. For the purpose of this description the term "solid-state" is defined as not having to dry the resulting mixture before calcining. Suitable phosphorus-containing compounds are all phosphorus compounds which are solid at the temperature at which they are combined with the crystalline alumina silicate. Examples are phosphoric acid salts such as ammonium dihydrogen phosphate and diammonium hydrogen phosphate, ammonium hypophosphate, ammonium orthophosphate, ammonium dihydrogen orthophosphate, ammonium hydrogen orthophosphate, triammonium phosphate, phosphines, and phosphites and mixtures thereof. It is preferred to use phosphorus-containing compounds which do not leave undesirable metals on the MFI-type zeolite. Therefore, the addition of for instance sodium salts is not advised.

The amount of phosphorus-containing compound to be used may vary from 0.1 to 50 wt% (calculated as P₂O₅ based on the crystalline alumina silicate). In FCC applications preferably 10-25 wt% is used.

All types of crystalline porous silicates may be used. These include both layered silicates and microporous silicates. Examples of suitable crystalline porous layered silicates, which in the prior art are also referred to as clays, including anionic clays and cationic clays, are kaolin, hydrotalcites, smectites, hectorites, montmorillonites, saponites, sepiolites, sjögrenites, etcetera.

The most common crystalline microporous silicates are metallosilicates. All types of microporous silicates may be used and may be in the hydrogen form, the ammonium form, or the ion-exchanged form, e.g., one or more rare earth metals. A specific type of metallosilicate which can suitably be used is the crystalline alumina silicate.

Examples of suitable crystalline microporous silicates include the MFI-type zeolites, faujasite-type zeolites such as Y-type zeolite, zeolite X and ZSM-20, MEL-type zeolites such as ZSM-11, ZSM-12, mordenite zeolites, ETS-4-type, ETS-10-type, MTW-type zeolites such as ZSM-12, MWW-type zeolites such as MCM -22, MCM-36, MCM-49, MCM-56, HEU-type zeolites, CHA-type zeolites, GME-type zeolites, EUO-type zeolites, ERI-type zeolites, FER-type zeolites, OFF-type zeolites, and BEA-type zeolites such as zeolite beta. MFI-type zeolites and faujasite-type zeolites are preferred.

MFI-type zeolites are as defined in the *ATLAS OF ZEOLITE STRUCTURE TYPES*, W.M. Meier and D.H. Olson, 3rd revised edition (1992), Butterworth-Heinemann, and include ZSM-5, ST-5, ZSM-8, ZSM-11, silicalite, LZ-105, LZ-222, LZ-223, LZ-241, LZ-269, L2-242, AMS-1B, AZ-1, BOR-C, Boralite, Encilite, FZ-1, NU-4, NU-5, T5-1, TSZ, TSZ-III, TZ01, TZ, USC-4, USI-108, ZBH, ZB-11, ZBM-30, ZKQ-1B, ZMQ-TB.

Examples of faujasite-type zeolites are the Y zeolites and zeolite X. All zeolites Y which are normally used in catalyst compositions are suitable and may be in the hydrogen form, the ammonium form, or the ion-exchanged form, e.g., one or more rare earth metals. Examples are de-aluminated zeolite Y, silica-enriched de-aluminated zeolite Y, and ultrastable zeolite Y (USY).

Next, the phosphorus-containing compound and the crystalline porous silicate are intimately mixed. This may be done by means of dry milling, for instance in a ball mill, a kneader or any other means which allows intimate mixing of solid materials. As mentioned above, some liquid may be present in the mixture, as long as no drying step is necessary prior to calcination. For instance, processing aids may be added to improve the conditions for intimate mixing.The mixing temperature may vary fom 0°C to the decomposition temperature of the phosphorus-containing compound used. The mixing time depends on the mixing means used.

After the mixing step, the resulting mixture is calcined at temperatures between 300 and 1000°C, preferably between 450 and 700°C, for about 15 minutes to 24 hours, depending on the amount of phosphorus-containing compound used and the type and amount of crystalline porous silicate used. The calcination step may be conducted in an inert, a reducing or an oxidising atmosphere such as air.

As mentioned above, the activated crystalline porous silicates according to the invention are suited to be incorporated into catalyst compositions. Owing to the *ex situ* activation, the phosphorus-containing compound present on the crystalline porous silicate is immobilised and will hardly interfere with any other catalyst components in the strike. Conventional catalyst components are catalytically active components such as the activated crystalline porous silicate according to the invention, optionally, additional catalytic components besides the activated crystalline porous silicate of the invention, binder or matrix material, and, optionally, additives to improve the physical and catalytic properties of the catalyst composition such as crystalline alumina, anionic clays, cationic clays, etctera, and fillers such as clay, for instance kaolin. Suitable binders ususally are alumina, silica, and silica-alumina. Thus, catalyst compositions according to the invention may comprise activated porous silicates according to the invention such as activated crystalline layered silicates, activated crystalline microporous silicates including metallosilicates or mixtures thereof. Preferred is the incorporation of activated metallosilicate such as actived MFI-type zeolite, activated faujasite-type zeolite, activated MCM-22 zeolite, activated mordenite, activated FER-type zeolite and/or BEA-type zeolite.

These types of catalyst compositions can suitably be used for the conversion of hydrocarbon feedstocks, the catalytic cracking of hydrocarbon feedstocks, and the conversion of aromatics or aliphatics.

The various catalyst components can be combined in any sequence, but it is preferred to add the phosphorus treated crystalline porous silicate to the strike last, so as to avoid any interference of the phosphorus with the other catalyst components.

An example of a catalyst composition which is very suitable for use in FCC comprises:
a) 10 to 40 wt% Y type zeolite,
b) 0.1 to 35 wt% activated MFI-type zeolite according to the invention,
c) 10-20 wt% alumina binder,
d) 1-15 wt% silica.

This catalyst composition appears to provide high propylene yields in combination with bottoms cracking, which is highly desirable for use in FCC.

With an activated MFI-type zeolite or activated MCM-22 according to the invention, catalyst compositions can be prepared which are extremely suitable for the alkylation of aromatics.

With an activated MFI-type zeolite, activated MCM-22 or activated mordenite according to the invention, catalyst compositions can be prepared which are extremely suitable for the disproportionation of aromatics.

With an activated MFI-type zeolite, activated MCM-22 or activated zeolite beta according to the invention, catalyst compositions can be prepared which are extremely suitable for the isomerisation of aromatics.

With an activated FER-type zeolite, activated faujasite or activated zeolite beta according to the invention, catalyst compositions can be prepared which are extremely suitable for the alkylation of aliphatic compounds.

For the isomerisation of aliphatic compounds, activated FER-type zeolites or activated MFI-type zeolites may be incorporated into catalyst compositions. Also for the preparation of caprolactam activated MFI-type zeolites according to the invention may be incorporated into catalyst compositions.

The activated crystalline alumina silicates according to the invention can suitably be incorporated into catalyst additives. Said additives may then be physically mixed with a catalyst composition. Usually, said activated crystalline alumina silicate is combined with a matrix (precursor) and spray-dried or shaped by any other means conventionally used in the catalyst field. All matrix (precursors) normally used may be applied here. Examples are aluminas such as (pseudo)boehmite, silica, silica-alumina, titania, zirconia.

Said additives are suitable for various purposes. For instance, a catalyst additive comprising an activated MFI-type crystalline alumina silicate can suitably be used for octane enhancement in FCC processes or for increasing the propylene yield in FCC processes. For these applications the phosphorus content on the MFI-type zeolite should be at least 10 wt% (calculated as P₂O₅ based on the MFI-type zeolite). Usually between 5 and 25 wt% of the additive is added to the FCC base catalyst.

The present invention is further illustrated by the Examples, which should in no way be construed as being limitative.

### EXAMPLES

### Example 1: solid-state ex situ activation of MFI-type zeolite

Dried SM-27 ® (ex AlSi Penta) was mixed with 25wt% (NH₄)H₂PO₄ corresponding to an addition of 15.3 wt% P₂O₅ (on a phosphorus basis) on ZSM-5 and milled in a ball mill for 1 hour. The mixture was calcined at 600°C for 1 hour. The resulting activated MFI-type zeolite had a P₂O₅ content of 10.5 wt%. P-NMR showed a material having a single broad peak at about 38 ppm.

### Comparative example 2: slurry ex situ activation of MFI-type zeolite

SM-27 ® (ex AlSi Penta) was slurried to obtain a 30 % slurry. H₃PO₄ was added to a level of 10 wt% P₂O₅ on ZSM-5. The pH was adjusted to above 4.5 with ammonia. The mixture was dried at 120°C overnight and calcined at 600°C for 1 hour. P-NMR showed a material with a different pattern: a compound feature containing multiple peaks with the maximum at about 5 ppm.

### Example 3: incorporation of activated MFI-type zeolite into catalyst composition

Catalyst compositions were prepared of both the solid-state-activated and the slurry-activated ZSM-5 by adding 5 wt% of the activated ZSM-5 as the last component to a strike containing 13.5 wt% REY zeolite, 18 wt% peptised pseudoboehmite, and 5 wt% silica. The strike was spray-dried. The catalyst compositions were steamed for 20 hours at 788°C. The physical properties of the two catalyst compositions are listed in TABLE 1.

**TABLE 1:**

| Physical properties of the catalyst compositions | | |
|---|---|---|
| | **solid-state-activated MFI-type zeolite** | **slurry-activated MFI-type zeolite** |
| Al₂O₃ | 48.5 | 48.09 |
| SiO₂ | 47.20 | 47.20 |
| Na₂O | 0.16 | 0.16 |
| RE₂O₃ | 2.03 | 1.98 |
| PSD | 66.5 | 68.7 |
| PV | 0.414 | 0.402 |
| SA_{bet} | 183 | 189 |

Both catalyst compositions were tested for catalytic cracking using Kuwait vacuum gas oil as a feedstock. The performance at catalyst to oil ratio 4 is reported in TABLE 2. It was acceptable to report at constant catalyst to oil ratio instead of at constant conversion because the activity difference was minimal, so the overall ranking was not changed by this.

**TABLE 2:**

| comparison performance of the catalyst compositions | | |
|---|---|---|
| | **solid-state-activated MFI-type zeolite** | **slurry-activated MFI-type zeolite** |
| Conversion | 76.7 | 76.8 |
| Coke | 4.1 | 4.3 |
| LPG | 24.5 | 24.9 |
| C₃⁼ | 8.4 | 8.5 |
| C₄⁼ | 7.9 | 8.2 |
| gasoline | 43.5 | 43.2 |

The results show that with the activation method according to the invention, activated crystalline alumina silicates can be obtained which are comparable with the activated zeolites obtained by other, less economical and less universally applicable *ex situ* activation methods.

## Claims

1. Solid-state phosphorus-activated crystalline porous silicate.

2. Process for the phosphorus activation of a crystalline porous silicate comprising the following steps:
a) combining crystalline porous silicate with a phosphorus-containing compound in a solid-state,
b) intimately mixing the crystalline porous silicate/phosphorus-containing compound mixture,
c) calcining the crystalline porous silicate/phosphorus-containing compound mixture to obtain a phosphorus activated crystalline porous silicate.

3. Solid-state phosphorus-activated crystalline porous silicate according to claim 1 wherein the crystalline porous silicate is a crystalline layered porous silicate, preferably an anionic clay or a cationic clay .

4. Solid-state phosphorus-activated crystalline porous silicate according to claim 1 wherein the crystalline porous silicate is a crystalline microporous silicate, preferably a metallosilicate, in particular an aluminosilicate.

5. Activated crystalline aluminosilicate according to claim 4 wherein the crystalline aluminosilicate is an MFI-type zeolite or a Y-type zeolite.

6. Catalyst composition comprising an activated crystalline porous silicate according to any one of claims 1, 3, 4, and 5.

7. Use of the catalyst composition of claim 6 in the conversion of hydrocarbon feeds, e.g., in the alkylation of aromatics, the solid-state phosphorus-activated crystalline porous silicate being activated MFI type zeolite or activated MCM-22 zeolite, or in the isomerisation of aromatics, the solid-state phosphorus-activated crystalline porous silicate being activated MFI type zeolite, activated MCM-22 zeolite, or activated beta zeolite, or in the disproportionation of aromatics, the solid-state phosphorus-activated crystalline porous silicate being activated MFI type zeolite, activated MCM-22 zeolite, or activated mordenite, or in the alkylation of aliphatic compounds, the solid-state phosphorus-activated crystalline porous silicate being activated FER type zeolite, activated faujasite or activated zeolite beta, or in the isomerisation of aliphatic compounds, the solid-state phosphorus-activated crystalline porous silicate being activated FER type zeolite or activated MFI type zeolite, or in the preparation of caprolactam, the solid-state phosphorus-activated crystalline porous silicate being activated MFI type zeolite.

8. Catalyst composition comprising:
a) 10 to 40 wt% Y-type zeolite,
b) 0.1 to 35 wt% activated MFI-type zeolite according to claim 5,
c) 10-20 wt% alumina binder,
d) 1-15 wt% silica.

9. Catalyst additive comprising a solid state phosphorous-activated crystalline porous silicate according to any one of claims 1, 3, 4 or 5.

10. Use of the catalyst of claim 6 or 8 or the additive of claim 9 comprising an activated MFI-type zeolite in the catalytic cracking of a hydrocarbon feed, with the additive being used in combination with a conventional catalytic cracking catalyst, to effect octane enhancement in FCC processes, and/or for increasing the propylene yield in FCC processes.
